# EUROPEAN PATENT APPLICATION

(11) **EP 4 778 954 A1**
(43) Date of publication of application: **22.07.2026**
(21) Application number: 23958489.9
(22) Date of filing: 13.11.2023
(51) Int. Cl.: C08G 18/79, C08G 18/38, C08G 18/28, C08G 18/72, C09D 175/04

(54) **POLYISOCYANATE COMPOSITION, AND COATING LAYER HAVING IMPROVED CHEMICAL RESISTANCE**

(71) Applicant: Wanhua Chemical Group Co., Ltd., Yantai, Shandong 264006 (CN)
(72) Inventor: ZHANG, Xiaopeng, Yantai, Shandong 264006 (CN); WANG, Dan, Yantai, Shandong 264006 (CN); CHEN, Rui, Yantai, Shandong 264006 (CN); WANG, Yuqi, Yantai, Shandong 264006 (CN); SHI, Bin, Yantai, Shandong 264006 (CN); SHANG, Yonghua, Yantai, Shandong 264006 (CN); YU, Tao, Yantai, Shandong 264006 (CN); CHEN, Lizhang, Yantai, Shandong 264006 (CN)
(74) Representative: Potter Clarkson
(86) International application number: PCT/CN2023/131241
(87) International publication number: WO 2025/102202

(57) **Abstract**

The present invention relates to the field of polyisocyanate compositions. Provided are a polyisocyanate composition and a coating layer having improved chemical resistance. The coating layer formed by a polyurethane coating composition based on the polyisocyanate composition provided by the present invention has remarkably improved chemical resistance and also has good comprehensive properties, such as good hardness and bending strength. The polyisocyanate composition is derived from at least one diisocyanate selected from aliphatic diisocyanates and cycloaliphatic diisocyanates. Among the compounds contained in the polyisocyanate composition, at least part of the compounds have isocyanurate groups, at least part of the compounds have at least one thioallophanate group, and in the polyisocyanate composition, the equivalent ratio of the thioallophanate groups to the isocyanurate groups is >0 and ≤0.3.

## Description

### TECHNICAL FIELD

The present invention relates to polyisocyanate compositions, and specifically to a polyisocyanate composition and a coating layer having improved chemical resistance.

### BACKGROUND

Aliphatic and cycloaliphatic polyisocyanates have excellent properties such as weather resistance, abrasion resistance, and corrosion resistance. They are widely used in industries such as coatings, adhesives, and elastomers, particularly in the paint industry, including as polyisocyanate curing agents containing isocyanate groups, which have the widest range of applications.

Aliphatic polyisocyanate compositions containing isocyanurate groups have excellent yellowing resistance. In addition, they have advantages such as low free monomer content, a saturated vapor concentration far below occupational safety limits, high functionality, and high downstream crosslinking density. Currently, a large number of documents and patents have reported methods for preparing isocyanurate-containing polyisocyanate compositions from aliphatic and cycloaliphatic diisocyanates in the presence of catalysts (e.g., J. Prakt. Chem. 336 (1994) 185-200, US4040992, US4288586, US4419513, US673062, US6800714, US7001973, etc.).

In view of the diversity of downstream application formulation systems, curing agents often need to be used with high-hydroxyl resins to increase the crosslinking density, mechanical properties, and chemical resistance of the paint film. However, due to the rigid structure of the isocyanurate ring itself, its compatibility in high-hydroxyl resin formulation systems is poor, resulting in phenomena such as cloudiness and bluish haze upon dilution of the composition, which affects the gloss of the resulting paint film. Currently, the main approach to improve the compatibility of polyisocyanate compositions is alcohol modification, i.e., introducing alcohols into the system.

US460441 reports a urethane-modified isocyanurate-containing polyisocyanate composition obtained by copolymerizing a polyisocyanate with a diol or a polyol.

US6420508 discloses a two-step method for synthesizing a polyisocyanate composition with good compatibility, in which the polyisocyanate first undergoes self-polymerization and is then modified with alcohol.

CN1074065 prepares a polyisocyanate composition with good compatibility by controlling the isocyanurate trimer content to ≤59% and the equivalent ratio of allophanate groups to isocyanurate groups to >0 and ≤0.19.

Although the compatibility issue can be partially addressed through alcohol modification, the composition obtained by this route often has drawbacks, such as low isocyanate group concentration, which leads to a higher curing agent dosage, and poor chemical resistance of the film formed from the composition.

### SUMMARY OF THE INVENTION

The present invention provides a polyisocyanate composition and a coating layer having improved chemical resistance. A coating layer formed from a polyurethane coating composition based on the polyisocyanate composition provided by the present invention has significantly improved chemical resistance, and also achieves good hardness and flexural strength.

To achieve its object, the present invention provides the following technical solutions:
In one aspect, the present invention provides a polyisocyanate composition, wherein the polyisocyanate composition is derived from at least one diisocyanate selected from the group consisting of aliphatic diisocyanates and cycloaliphatic diisocyanates, and among compounds comprised in the polyisocyanate composition, at least some of the compounds have an isocyanurate group, and at least some of the compounds have at least one thioallophanate group; and in the polyisocyanate composition, an equivalent ratio of the thioallophanate groups to the isocyanurate groups is >0 and ≤0.3, for example, 0.001, 0.003, 0.005, 0.007, 0.010, 0.015, 0.020, 0.025, 0.030, 0.050, 0.070, 0.100, 0.150, 0.200, 0.250, 0.270, or 0.300.

The inventors have unexpectedly found that by controlling the equivalent ratio of thioallophanate groups to isocyanurate groups in the polyisocyanate composition to be >0 and ≤0.3, it is advantageous to improve the chemical resistance of polyurethane coating layers based on the polyisocyanate composition, while ensuring good hardness and flexural strength.

Preferably, in the polyisocyanate composition, the equivalent ratio of the thioallophanate groups to the isocyanurate groups is 0.005-0.250. More preferably, the equivalent ratio of the thioallophanate groups to the isocyanurate groups is 0.005-0.100. By controlling the equivalent ratio of the polyisocyanate composition within the preferred range, it is advantageous to further enhance the coating properties of the resulting polyurethane coating, while achieving even better chemical resistance, hardness, and flexural strength.

In the present invention, the isocyanurate group refers to a group having the following structural unit:

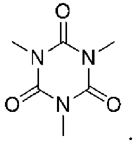

In the present invention, the thioallophanate group refers to a group having the following structural unit:

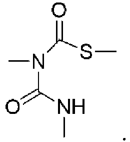

The thioallophanate groups are distributed among oligomers such as trimers, pentamers, heptamers, and/or nonamers during the trimerization process.

In the present invention, in addition to isocyanurate groups and thioallophanate groups, the polyisocyanate composition optionally contains (i.e., may or may not contain) one or more selected from the group consisting of iminooxadiazinedione groups, biuret groups, uretdione groups, thiocarbamate groups, and uretonimine groups.

Among them, the iminooxadiazinedione group refers to a group having the following structural unit: 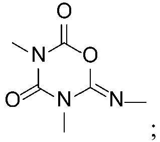 the biuret group refers to a group having the following structural unit: 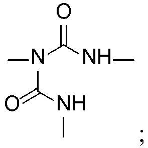 the uretdione group refers to a group having the following structural unit: 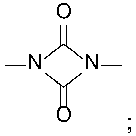 the thiocarbamate group refers to a group having the following structural unit: 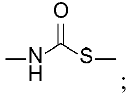 and
the uretonimine group refers to a group having the following structural unit:

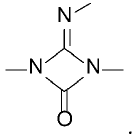

The above structural units can be detected by nuclear magnetic resonance carbon spectroscopy.

In the polyisocyanate composition, the content of the isocyanurate groups is ≥90 mol% and <100 mol%, based on the total amount of isocyanurate groups, thioallophanate groups, and optionally present (i.e. present or absent) iminooxadiazinedione groups, biuret groups, uretdione groups, thiocarbamate groups, and uretonimine groups in the composition. When iminooxadiazinedione groups, biuret groups, uretdione groups, thiocarbamate groups, and/or uretonimine groups are present, they are included in the total amount; when they are absent, their amount is 0. The content of the isocyanurate groups is, for example, 90%, 91%, 92%, 93%, 94%, 95%, 96%, 97%, 98%, 99%, or 99.5%.

Further, the polyisocyanate composition can be obtained by reacting reaction materials comprising a diisocyanate and a thiol compound. The thiol compound is at least one selected from the group consisting of linear or branched, optionally substituted thiol compounds. Preferably, the group in the thiol compound that is reactive towards the isocyanate groups is a thiol group. Specifically, besides the thiol group, the thiol compound contains no other groups reactive towards the isocyanate groups. In some embodiments, for example, the thiol compound is inert towards the isocyanate groups in the side chain.

Preferably, the thiol compound has 1 to 20 carbon atoms, preferably 6 to 12 carbon atoms; the thiol compound may be one or more selected from the group consisting of monothiols and polythiols. More preferably, the thiol compound is a monothiol, for example, a monothiol having 6 to 12 carbon atoms. The inventors have found that, compared with the use of polythiols, the polyisocyanate composition obtained by using a monothiol can better improve the coating performance when subsequently applied in polyurethane coatings, achieving not only excellent chemical resistance, hardness, and flexural strength, but also excellent adhesion. Among these, the monothiol is preferably one or more selected from the group consisting of 1-hexanethiol, 2-hexanethiol, 3-hexanethiol, 1-methylpentane-2-thiol, 3,3-dimethylbutane-1-thiol, 2-ethylbutane-1-thiol, 1-methyl-1-pentanethiol, 3-methylpentane-2-thiol, 1-heptanethiol, 2-heptanethiol, 1-octanethiol, 2-octanethiol, 2-ethyl-1-hexanethiol, 1-nonanethiol, 2-nonanethiol, 1-decanethiol, 3-decanethiol, 1-undecanethiol, 10-undecene-1-thiol, 1-dodecanethiol, 2-dodecanethiol, and tert-dodecanethiol.

Polythiols may be ethylene glycol bis(3-mercaptopropionate), butanedithiol, propanedithiol, 1,5-pentanedithiol, propane-1,2,3-trithiol, trimethylolpropane tris(3-mercaptopropionate), pentaerythritol tetrakis(3-mercaptopropionate), etc.

The polyisocyanate composition of the present invention is derived from aliphatic diisocyanates and/or cycloaliphatic diisocyanates. As used herein, "derived from aliphatic diisocyanates and/or cycloaliphatic diisocyanates" means that the main raw materials used for preparing the polyisocyanate composition at least include aliphatic diisocyanates and/or cycloaliphatic diisocyanates. The aliphatic diisocyanates and/or cycloaliphatic diisocyanates used in the preparation process are one or more selected from the group consisting of hexamethylene diisocyanate (HDI), pentamethylene diisocyanate (PDI), 2-methylpentane-1,5-diisocyanate, 2,4,4-trimethyl-1,6-hexane diisocyanate, 2,2,4-trimethyl-1,6-hexane diisocyanate, 4-isocyanatomethyl-1,8-octane diisocyanate, 3-isocyanatomethyl-1-methylcyclohexyl isocyanate (IMCI), 4-isocyanatomethyl-1-methylcyclohexyl isocyanate (IMCI), isophorone diisocyanate (IPDI), 1,3-bis(isocyanatomethyl)cyclohexane, and 1,4-bis(isocyanatomethyl)cyclohexane (H6XDI), preferably one or both of hexamethylene diisocyanate (HDI) and pentamethylene diisocyanate (PDI).

The reaction is carried out in the presence of a catalyst.

The catalyst is preferably one or more selected from the group consisting of quaternary ammonium hydroxides, quaternary ammonium carboxylates, compounds containing an silylamino group, tertiary amine compounds, and Mannich base compounds. Among these, the quaternary ammonium hydroxides are, for example, one or more selected from the group consisting of tetramethylammonium hydroxide, trimethylbenzylammonium hydroxide, tetraethylammonium hydroxide, dimethylethylcyclohexylammonium hydroxide, and hydrates thereof, preferably one or more selected from the group consisting of tetramethylammonium hydroxide, trimethylbenzylammonium hydroxide and hydrates thereof. The quaternary ammonium carboxylates are, for example, one or more selected from the group consisting of tetramethylammonium 2-ethylhexanoate, tetramethylammonium octanoate, trimethylbenzylammonium 2-ethylhexanoate, trimethylbenzylammonium octanoate, tetramethylammonium formate, tetramethylammonium acetate, tetramethylammonium pivalate, trimethylbenzylammonium pivalate, tetramethylammonium decanoate, trimethylbenzylammonium decanoate, tetramethylammonium myristate, tetramethylammonium 2-ethylhexanoate, tetramethylammonium octanoate, trimethylbenzylammonium 2-ethylhexanoate, and trimethylbenzylammonium octanoate. The compounds containing the silylamino group are, for example, one or more selected from the group consisting of hexamethyldisilazane, silylamine, and heptamethyldisilazane, preferably hexamethyldisilazane. Further, the tertiary amine compounds are, for example, one or both of triethylamine and tripropylamine, preferably triethylamine; the Mannich base compounds are, for example, tris(N,N-dimethylaminomethyl)phenol. The inventors have found that using the above preferred catalysts that do not contain metal elements facilitates obtaining polyisocyanate compositions that satisfy the equivalent ratio of thioallophanate groups to isocyanurate groups as required in the present invention. In particular, the target product can be obtained at relatively low reaction temperatures. For example, the target product of the present invention can be obtained at reaction temperatures not exceeding 80°C (e.g., 30-79°C, such as 45-75°C). In the present invention, the catalyst may be used as a pure substance or optionally dissolved in a solvent at any concentration. The catalyst is preferably added in an amount of 0.001-0.1 wt% based on the amount of the starting diisocyanate used for preparing the polyisocyanate composition, for example, 0.001 wt%, 0.005 wt%, 0.01 wt%, 0.05 wt%, or 0.1 wt%, preferably 0.005-0.05 wt%; using the preferred catalyst amount facilitates obtaining a polyisocyanate composition that satisfies the equivalent ratio of thioallophanate groups to isocyanurate groups as required in the present invention.

In some preferred embodiments, when the polyisocyanate composition is prepared by reacting a starting diisocyanate and a thiol compound in the presence of a catalyst, the reaction temperature may be 10-150°C, for example, 10°C, 30°C, 50°C, 100°C, 120°C, or 150°C, preferably 30-79°C, more preferably 45-75°C. Reacting at the preferred temperature facilitates obtaining a polyisocyanate composition that satisfies the equivalent ratio of thioallophanate groups to isocyanurate groups as required in the present invention, while also achieving good operational safety.

The polyisocyanate composition satisfying the equivalent ratio of thioallophanate groups to isocyanurate groups as required in the present invention can be obtained by adjusting the amounts of diisocyanate and thiol compound, the NCO% value of the reaction system at the reaction endpoint, the type and amount of catalyst, and/or the reaction temperature.

In some embodiments, in the reaction system for preparing the polyisocyanate composition, the amounts of diisocyanate and thiol compound are such that the equivalent ratio of thiol groups provided by the thiol compound to isocyanate groups provided by the diisocyanate is greater than 0 and ≤0.06, for example, 0.01, 0.02, 0.03, 0.04, 0.05, or 0.06. The specific amounts of diisocyanate and thiol compound are such that the equivalent ratio of thioallophanate groups to isocyanurate groups in the prepared polyisocyanate composition meets the requirements of the present invention.

During the reaction process for preparing the polyisocyanate composition, the NCO% value of the reaction system is monitored. Preferably, the reaction endpoint is when the NCO% value of the reaction system is in the range of 30-50%, for example, 30%, 35%, 37%, 40%, 45%, 47%, or 50%. When the reaction system reaches the target NCO%, the polymerization reaction is terminated. The inventors have found that when the NCO% value is greater than 50%, it often leads to problems such as low conversion, high monomer consumption, increased energy consumption for subsequent monomer removal, and low functionality of the composition; when the NCO% value is <30%, the viscosity of the polyisocyanate composition is too high, which has an adverse effect on the convenience of downstream construction and the leveling property of the paint film. Specifically, the polymerization reaction can be terminated by adding a catalyst poison to the reaction system. As catalyst poisons, acidic reactive substances such as protonic acids (e.g., dibutyl phosphate), or acylating agents (e.g., isophthaloyl dichloride) may be considered. In some examples, the catalyst poison is one or more selected from the group consisting of protonic acids and acylating agents, preferably one or more selected from the group consisting of phosphoric acid, benzoic acid, diisooctyl phosphate, and dibutyl phosphate. Those skilled in the art will understand that different types of polymerization catalysts used in the reaction system will result in different amounts of catalyst poison. In the reaction system of the present invention, the catalyst poison is added in such an amount that the polymerization catalyst in the system is deactivated.

In the present invention, the unreacted monomer (diisocyanate) can be removed from the reaction solution obtained during the preparation of the polyisocyanate composition by treatment with a single-stage or multi-stage thin film evaporator. Specifically, for example, after treatment, the residual monomer content in the polyisocyanate composition is less than 0.5 wt% based on the mass of the composition.

In some embodiments, the polyisocyanate composition provided in the present invention has a viscosity of 2000-20000 cP/25°C, for example, 2000, 2500, 3000, 5000, 7000, 9000, 10000, 15000, or 20000 cP/25°C, for example, 2000-15000 cP/25°C, and an isocyanate group content of 20-25%.

The inventors have found that, in a polyisocyanate composition obtained by reacting an aliphatic diisocyanate and/or a cycloaliphatic diisocyanate with a monothiol, under otherwise substantially the same conditions, a polyisocyanate composition satisfying an equivalent ratio of thioallophanate groups to isocyanurate groups of >0 and ≤0.3, compared with a polyisocyanate composition not satisfying this equivalent ratio, provides a polyurethane coating composition, particularly a two-component polyurethane coating system formed with a binder that is reactive toward isocyanate groups, that yields a coating layer with good comprehensive properties such as pendulum hardness, chemical resistance, and flexural strength. Among these, the binder that is reactive towards isocyanate groups may be of a type commonly used in the field of polyurethane coatings, for example, one or more selected from the group consisting of polyether polyols, polyester polyols, polyurethane polyols, polysiloxane polyols, polycarbonate polyols, polyether polyamines, polyaspartic acid, polybutadiene polyols, polyacrylate polyols, polyacrylic polyols, and the like.

In the present invention, the NCO content (NCO%) is determined according to the method of GB/T 12009.4-2016, wherein NCO% refers to the mass percentage content of isocyanate groups. The viscosity is obtained using a BrookField DV-I Prime viscometer with an S21 spindle at 25°C.

The present invention further provides the use of the polyisocyanate composition described above as a crosslinking agent in coating compositions.

The present invention further provides a two-component polyurethane coating composition, comprising component A and component B, wherein the component A comprises at least one polyisocyanate composition as described above, and the component B comprises at least one binder that is reactive towards isocyanate groups. Regarding the two-component polyurethane coating composition, in addition to the requirement of containing the above-mentioned polyisocyanate composition provided in the present invention, the other components and/or the amount of each component can be selected conventionally for two-component polyurethane coating compositions, and there are no specific limitations in this regard. Specifically, the binder that is reactive towards isocyanate groups is a hydroxyl resin. In some embodiments, the binder that is reactive towards isocyanate groups is one or more selected from the group consisting of polyether polyols, polyester polyols, polyurethane polyols, polysiloxane polyols, polycarbonate polyols, polyether polyamines, polyaspartic acid, polybutadiene polyols, polyacrylate polyols, and polyacrylic polyols.

In some embodiments, in the two-component polyurethane coating composition, the polyisocyanate composition is used in an amount such that the molar ratio of the -NCO groups in the polyisocyanate composition to the hydroxyl groups in the hydroxyl resin is 1:0.9 to 1:1.1.

In some embodiments, in the two-component polyurethane coating composition, other components such as leveling agents, other auxiliary agents, and additives can also be added to component A and/or component B according to application requirements. The specific selection and specific amounts of other components can be adjusted and determined according to actual application requirements.

The polyisocyanate composition of the present invention acts as a curing agent in the polyurethane coating composition. Preparing a polyurethane coating composition based on the polyisocyanate composition of the present invention, particularly introducing the polyisocyanate composition of the present invention into a two-component polyurethane coating composition in which a binder reactive towards isocyanate groups serves as the main resin, can provide a coating layer with significantly improved chemical resistance while also achieving good comprehensive properties such as pendulum hardness and flexural strength.

The present invention further provides a coating layer having improved chemical resistance, which is obtained by applying the polyurethane coating composition described above onto the surface of a substrate. This coating layer can be a film layer formed by applying the polyurethane coating as an adhesive onto the surfaces of substrates in fields such as automobiles and woodenware.

The technical solutions provided by the present invention have the following beneficial effects:
Applying the polyisocyanate composition of the present invention to a polyurethane coating is beneficial for improving the performance of the resulting coating film. It enables the resulting coating film to possess improved chemical resistance and hardness, while simultaneously achieving good comprehensive properties such as flexural strength.

### DETAILED DESCRIPTION

To facilitate understanding of the present invention, the present invention will be further described below with reference to examples. It should be understood that the following examples are only for better understanding of the present invention and do not imply that the present invention is limited to the following examples.

Unless otherwise defined, all technical and scientific terms used herein have the same meaning as commonly understood by one of ordinary skill in the art to which the present invention belongs. The term "and/or" as may be used herein includes any and all combinations of one or more of the associated listed items.

In the examples, where specific experimental steps or conditions are not indicated, the operations or conditions may follow the corresponding conventional experimental procedures in the technical field. Any reagents or instruments whose manufacturers are not specified are conventional products commercially available.

### Description of Test Methods:

NCO Content: The NCO content is determined according to the method of GB/T 12009.4-2016.

Residual Monomer Content: The residual monomer content in the reaction system is determined by gas chromatography according to the method of GB/T18583-2008.

Viscosity: Obtained using a BrookField DV-I Prime viscometer with an S21 spindle at 25°C.

In the present invention, the content (mol%) and equivalent ratio (molar ratio) of thioallophanate groups and isocyanurate groups in the polyisocyanate composition can be determined using ¹³C-NMR measurement. Specific test conditions are as follows:
¹³C-NMR Equipment: AVANCE600 (Bruker), equipped with BBO probe (Bruker);
Sample concentration: 30 wt%;
Resonance frequency: 150 MHz;
Shift reference: 77.0 ppm (CDCl₃);
Pulse program: zgig30;
Spectral width: 240 ppm;
Spectral center: 100 ppm;
Chemical shift of isocyanurate group: 148 ppm; chemical shifts of thioallophanate group: 173 ppm and 153 ppm; chemical shifts of iminooxadiazinedione group: 135 ppm, 145 ppm and 148 ppm; chemical shift of biuret group: 156 ppm; chemical shift of uretdione group: 157 ppm; chemical shift of thiocarbamate group: 167 ppm; chemical shift of uretonimine group: 159 ppm. In the examples and comparative examples, the content (mol%) of isocyanurate groups is based on the total amount of isocyanurate groups, thioallophanate groups, and optionally present iminooxadiazinedione groups, biuret groups, uretdione groups, thiocarbamate groups, and uretonimine groups in the prepared polyisocyanate composition.

The equivalent ratio of thioallophanate groups to isocyanurate groups is calculated by the ratio of the integrated value around 148.5 ppm to (the integrated value around 173 ppm + the integrated value around 153 ppm)/2.

### Raw Materials and Reagents:

HDI: Hexamethylene diisocyanate, Wanhua Chemical Group Co., Ltd.;
PDI: Pentamethylene diisocyanate, Wanhua Chemical Group Co., Ltd.;
1-Hexanethiol: Aladdin Reagent Co., Ltd.;
1-Octanethiol: Aladdin Reagent Co., Ltd.;
1-Dodecanethiol: Aladdin Reagent Co., Ltd.;
Tetramethylammonium 2-ethylhexanoate: Kent Chemical Co., Ltd.;
Tetramethylammonium hydroxide pentahydrate: InnoChem Technology Co., Ltd.;
Acetone: InnoChem Technology Co., Ltd.;
Polyacrylic polyol: ACR6780, Foshan Gaoming Tongde Chemical Co., Ltd.;
Ethylene glycol bis(3-mercaptopropionate): Aladdin Reagent Co., Ltd.

### [Example 1]

750 g of PDI was added into a reactor, stirred and heated to 50°C under a nitrogen atmosphere. Then, 13.5 g of 1-dodecanethiol was added into the reactor, and the temperature was maintained at 50°C. 0.68 g of a tetramethylammonium 2-ethylhexanoate solution (20 wt% in acetone) was added dropwise to the system, and the NCO% of the reaction mixture was monitored. When the NCO% value dropped to 39.4%, 0.09 g of dibutyl phosphate was added to terminate the reaction. The reaction mixture was separated using a short-path evaporator (separation temperature: 150°C, pressure: 12 Pa) to remove unreacted PDI monomer, thereby yielding polyisocyanate composition 1.

### [Example 2]

800 g of PDI was added into a reactor, stirred and heated to 55°C under a nitrogen atmosphere. Then, 8 g of 1-dodecanethiol was added into the reactor, and the temperature was maintained at 55°C. 0.96 g of a tetramethylammonium 2-ethylhexanoate solution (20 wt% in acetone) was added dropwise to the system, and the NCO% of the reaction mixture was monitored. When the NCO% value dropped to 39.2%, 0.13 g of dibutyl phosphate was added to terminate the reaction. The reaction mixture was separated using a short-path evaporator (separation temperature: 150°C, pressure: 12 Pa) to remove unreacted PDI monomer, thereby yielding polyisocyanate composition 2.

### [Example 3]

800 g of HDI was added into a reactor, stirred and heated to 70°C under a nitrogen atmosphere. Then, 4 g of 1-dodecanethiol was added into the reactor, and the temperature was maintained at 70°C. 1.12 g of a tetramethylammonium hydroxide pentahydrate solution (5 wt% in acetone) was added dropwise to the system, and the NCO% of the reaction mixture was monitored.

When the NCO% value dropped to 40.2%, 0.04 g of dibutyl phosphate was added to terminate the reaction. The reaction mixture was separated using a short-path evaporator (separation temperature: 150°C, pressure: 12 Pa) to remove unreacted HDI monomer, thereby yielding polyisocyanate composition 3.

### [Example 4]

900 g of PDI was added into a reactor, stirred and heated to 60°C under a nitrogen atmosphere. Then, 3.6 g of 1-hexanethiol was added into the reactor, and the temperature was maintained at 60°C. 0.95 g of a tetramethylammonium 2-ethylhexanoate solution (20 wt% in acetone) was added dropwise to the system, and the NCO% of the reaction mixture was monitored. When the NCO% value dropped to 47.6%, 0.13 g of dibutyl phosphate was added to terminate the reaction. The reaction mixture was separated using a short-path evaporator (separation temperature: 155°C, pressure: 10 Pa) to remove unreacted PDI monomer, thereby yielding polyisocyanate composition 4.

### [Example 5]

800 g of PDI was added into a reactor, stirred and heated to 55°C under a nitrogen atmosphere. Then, 14.4 g of 1-octanethiol was added into the reactor, and the temperature was maintained at 55°C. 0.72 g of a tetramethylammonium 2-ethylhexanoate solution (20 wt% in acetone) was added dropwise to the system, and the NCO% of the reaction mixture was monitored. When the NCO% value dropped to 37.5%, 0.10 g of diisooctyl phosphate was added to terminate the reaction. The reaction mixture was separated using a short-path evaporator (separation temperature: 155°C, pressure: 10 Pa) to remove unreacted PDI monomer, thereby yielding polyisocyanate composition 5.

### [Example 6]

800 g of PDI was added into a reactor, stirred and heated to 55°C under a nitrogen atmosphere. Then, 10.25 g of 1-dodecanethiol was added into the reactor, and the temperature was maintained at 55°C. 0.60 g of a tetramethylammonium 2-ethylhexanoate solution (20 wt% in acetone) was added dropwise to the system, and the NCO% of the reaction mixture was monitored. When the NCO% value dropped to 37.6%, 0.08 g of diisooctyl phosphate was added to terminate the reaction. The reaction mixture was separated using a short-path evaporator (separation temperature: 160°C, pressure: 10 Pa) to remove unreacted PDI monomer, thereby yielding polyisocyanate composition 6.

### [Example 7]

750 g of PDI was added into a reactor, stirred and heated to 55°C under a nitrogen atmosphere. Then, 32.0 g of 1-dodecanethiol was added into the reactor, and the temperature was maintained at 55°C. 1.58 g of a tetramethylammonium 2-ethylhexanoate solution (20 wt% in acetone) was added dropwise to the system, and the NCO% of the reaction mixture was monitored. When the NCO% value dropped to 37.2%, 0.22 g of diisooctyl phosphate was added to terminate the reaction. The reaction mixture was separated using a short-path evaporator (separation temperature: 180°C, pressure: 18 Pa) to remove unreacted PDI monomer, thereby yielding polyisocyanate composition 7.

### [Example 8]

800 g of PDI was added into a reactor, stirred and heated to 55°C under a nitrogen atmosphere. Then, 42.8 g of 1-dodecanethiol was added into the reactor, and the temperature was maintained at 55°C. 0.95 g of a tetramethylammonium 2-ethylhexanoate solution (20 wt% in acetone) was added dropwise to the system, and the NCO% of the reaction mixture was monitored. When the NCO% value dropped to 45.5%, 0.13 g of phosphoric acid was added to terminate the reaction. The reaction mixture was separated using a short-path evaporator (separation temperature: 150°C, pressure: 12 Pa) to remove unreacted PDI monomer, thereby yielding polyisocyanate composition 8.

### [Comparative Example 1]

800 g of PDI was added into a reactor, stirred and heated to 55°C under a nitrogen atmosphere. Then, 80 g of 1-dodecanethiol was added into the reactor, and the temperature was maintained at 55°C. 0.80 g of a tetramethylammonium 2-ethylhexanoate solution (20 wt% in acetone) was added dropwise to the system, and the NCO% of the reaction mixture was monitored. When the NCO% value dropped to 30.2%, 0.11 g of diisooctyl phosphate was added to terminate the reaction. The reaction mixture was separated using a short-path evaporator (separation temperature: 150°C, pressure: 12 Pa) to remove unreacted PDI monomer, thereby yielding polyisocyanate composition A.

### [Comparative Example 2]

The procedure was carried out with reference to Example 3, except that 1-dodecanethiol was not added to the reaction system. All other operations were carried out with reference to Example 3.

### Comparative Example 2 yielded polyisocyanate composition B.

### [Example 9]

750 g of PDI was added into a reactor, stirred and heated to 50°C under a nitrogen atmosphere. Then, 7.95 g of ethylene glycol bis(3-mercaptopropionate) was added into the reactor, and the temperature was maintained at 50°C. 0.68 g of a tetramethylammonium 2-ethylhexanoate solution (20 wt% in acetone) was added dropwise to the system, and the NCO% of the reaction mixture was monitored. When the NCO% value dropped to 38.4%, 0.09 g of dibutyl phosphate was added to terminate the reaction. The reaction mixture was separated using a short-path evaporator (separation temperature: 150°C, pressure: 12 Pa) to remove unreacted PDI monomer, thereby yielding polyisocyanate composition C.

The specifications results of the polyisocyanate compositions are listed in Table 1.

**Table 1: Basic specifications of polyisocyanate composition products**

| Item | Basic Specifications of the Product | | | | |
|---|---|---|---|---|---|
| | NCO/% | Free diisocyanate monomer content/% | Viscosity/ cP·25°C | Equivalent ratio of thioallophanate groups to isocyanurate groups | Isocyanurate group content (mol%) |
| Example 1 | 22.0 | 0.12 | 9881 | 0.020 | 98% |
| Example 2 | 22.6 | 0.21 | 7783 | 0.013 | 97% |
| Example 3 | 23.0 | 0.18 | 8418 | 0.007 | 96% |
| Example 4 | 24.0 | 0.20 | 2932 | 0.012 | 97% |
| Example 5 | 22.3 | 0.16 | 9337 | 0.038 | 99% |
| Example 6 | 22.1 | 0.13 | 12262 | 0.014 | 98% |
| Example 7 | 21.8 | 0.18 | 9956 | 0.080 | 96% |
| Example 8 | 22.84 | 0.21 | 1010 | 0.216 | 94% |
| Comparative Example 1 | 20.5 | 0.15 | 3104 | 0.330 | 93% |
| Comparative Example 2 | 21.9 | 0.13 | 2556 | 0 | 97% |
| Example 9 | 22.4 | 0.12 | 16530 | 0.016 | 96% |

The polyisocyanate compositions prepared in the above examples and comparative examples were respectively mixed with a hydroxyl resin (Tongde ACR6780) at an NCO/OH molar ratio of 1:1, and then diluted with a mixed solvent of ethyl acetate/xylene (mass ratio 1:1) to obtain a paint with a polyisocyanate composition content of 40 wt%. The final paints prepared from the polyisocyanate compositions of Examples 1 to 8 were respectively designated as Paints 1 to 8 in order, and the final paints prepared from the polyisocyanate compositions of Comparative Example 1, Comparative Example 2, and Example 9 were respectively designated as Paints A, B, and C in order.

The prepared paints were tested for properties such as adhesion according to the following methods:
(1) Chemical Resistance: GB/T 23989-2009. The test panel was placed in a constant temperature and humidity environment (temperature: 75°C, humidity: 50%) and conditioned for one week. The weight mass was 1 kg, the rubbing speed was 60 times/min, the rubbing solvent was butanone, and the substrate was a tinplate panel.
(2) Pendulum Hardness Test: GB/T 1730. The substrate used was a glass plate.
(3) Adhesion Rating Test: GB/T 9286. The substrate used was a tinplate panel.
(4) Flexural Strength: GB/T 11185-2009, Paints and varnishes-Bend test (conical mandrel). The substrate used was a tinplate panel.

The test results are shown in Table 2.

**Table 2: Performance Test Results of Paints**

| Item | Raw materials for preparing the polyisocyanate composition | Chemical resistance / times | Pendulum hardness | Adhesion /grade | Flexural strength / mm | Equivalent ratio of thioallophanate groups to isocyanurate groups |
|---|---|---|---|---|---|---|
| Paint 1 | PDI + 1-dodecanethiol | 175 | 0.74 | 0 | 2 | 0.020 |
| Paint 2 | PDI + 1-dodecanethiol | 168 | 0.73 | 0 | 2 | 0.013 |
| Paint 3 | HDI + 1-dodecanethiol | 138 | 0.65 | 0 | 2 | 0.007 |
| Paint 4 | PDI + 1-hexanethiol | 167 | 0.77 | 0 | 2 | 0.012 |
| Paint 5 | PDI + 1-octanethiol | 178 | 0.74 | 0 | 2 | 0.038 |
| Paint 6 | PDI + 1-dodecanethiol | 172 | 0.78 | 0 | 2 | 0.014 |
| Paint 7 | PDI + 1-dodecanethiol | 150 | 0.71 | 0 | 2 | 0.080 |
| Paint 8 | PDI + 1-dodecanethiol | 119 | 0.65 | 0 | 2 | 0.216 |
| Paint A | PDI + 1-dodecanethiol | 101 | 0.61 | 0 | 2 | 0.330 |
| Paint B | HDI | 90 | 0.58 | 0 | 2 | 0 |
| Paint C | PDI + ethylene glycol bis(3-mercaptopropionate) | 175 | 0.73 | 1 | 2 | 0.016 |

From the performance test results in Table 1 and Table 2, it can be seen that among Paints 1-8 and Paint C obtained in Examples 1-9 of the present invention, the polyisocyanate compositions in which the equivalent ratio of thioallophanate groups to isocyanurate groups is controlled to be >0 and ≤0.3 all enable the resulting paints to achieve excellent chemical resistance, pendulum hardness, and flexural strength simultaneously. In contrast, Paints A and B obtained in Comparative Examples 1 and 2 exhibit significantly inferior chemical resistance and pendulum hardness compared to the paints obtained in the Examples, and cannot simultaneously achieve good chemical resistance, pendulum hardness, and flexural strength.

In Examples 1-8, while the equivalent ratio of thioallophanate groups to isocyanurate groups in the polyisocyanate composition is controlled to be >0 and ≤0.3, a monothiol is used in the preparation of the polyisocyanate composition. As a result, compared with the paint obtained in Example 9, in which no monothiol is used, the resulting paints not only achieve excellent chemical resistance, pendulum hardness, and flexural strength simultaneously, but also achieve excellent adhesion. In contrast, the paint of Example 9 could not simultaneously achieve excellent adhesion.

Compared with Examples 1-7, the equivalent ratio of thioallophanate groups to isocyanurate groups in the polyisocyanate composition of Example 8 is not within the more preferred range of 0.005-0.100, and consequently the performance of the resulting paint is inferior to that of the paints obtained in Examples 1-7.

It should be readily understood that the above examples are merely examples provided for the purpose of clear illustration and do not imply that the present invention is limited thereto. For those of ordinary skill in the art, other variations or modifications of different forms may be made based on the above description. It is neither necessary nor possible to exhaustively list all embodiments herein. However, obvious variations or modifications derived therefrom still fall within the scope of protection of the present invention.

## Claims

1. A polyisocyanate composition, wherein the polyisocyanate composition is derived from at least one diisocyanate selected from the group consisting of aliphatic diisocyanates and cycloaliphatic diisocyanates, and among compounds comprised in the polyisocyanate composition, at least some of the compounds have an isocyanurate group, and at least some of the compounds have at least one thioallophanate group; and wherein in the polyisocyanate composition, an equivalent ratio of the thioallophanate group to the isocyanurate group is >0 and ≤0.3.

2. The polyisocyanate composition according to claim 1, wherein in the polyisocyanate composition, the equivalent ratio of the thioallophanate group to the isocyanurate group is 0.005-0.250, more preferably 0.005-0.100.

3. The polyisocyanate composition according to claim 1 or 2, wherein in the polyisocyanate composition, a content of the isocyanurate group is ≥90 mol% and <100 mol%, based on a total amount of isocyanurate groups, thioallophanate groups, and optionally present iminooxadiazinedione groups, biuret groups, uretdione groups, thiocarbamate groups, and uretonimine groups in the composition.

4. The polyisocyanate composition according to any one of claims 1-3, wherein the polyisocyanate composition is obtainable by reacting reaction materials comprising the diisocyanate and a thiol compound, and the thiol compound is at least one selected from the group consisting of linear or branched, optionally substituted thiol compounds; preferably, a group in the thiol compound that is reactive towards the isocyanate group is a thiol group.

5. The polyisocyanate composition according to claim 4, wherein the thiol compound has 1-20 carbon atoms, preferably 6-12 carbon atoms;
preferably, the thiol compound is one or more selected from the group consisting of a monothiol and a polythiol, more preferably the monothiol;
further preferably, the thiol compound is one or more selected from the group consisting of 1-hexanethiol, 2-hexanethiol, 3-hexanethiol, 1-methylpentane-2-thiol, 3,3-dimethylbutane-1-thiol, 2-ethylbutane-1-thiol, 1-methyl-1-pentanethiol, 3-methylpentane-2-thiol, 1-heptanethiol, 2-heptanethiol, 1-octanethiol, 2-octanethiol, 2-ethyl-1-hexanethiol, 1-nonanethiol, 2-nonanethiol, 1-decanethiol, 3-decanethiol, 1-undecanethiol, 10-undecene-1-thiol, 1-dodecanethiol, 2-dodecanethiol, and tert-dodecanethiol.

6. The polyisocyanate composition according to any one of claims 1-5, wherein the diisocyanate is one or more selected from the group consisting of hexamethylene diisocyanate, pentamethylene diisocyanate, 2-methylpentane-1,5-diisocyanate, 2,4,4-trimethyl-1,6-hexane diisocyanate, 2,2,4-trimethyl-1,6-hexane diisocyanate, 4-isocyanatomethyl-1,8-octane diisocyanate, 3-isocyanatomethyl-1-methylcyclohexyl isocyanate, 4-isocyanatomethyl-1-methylcyclohexyl isocyanate, isophorone diisocyanate, 1,3-bis(isocyanatomethyl)cyclohexane, and 1,4-bis(isocyanatomethyl)cyclohexane, preferably one or both of hexamethylene diisocyanate and pentamethylene diisocyanate.

7. The polyisocyanate composition according to any one of claims 4-6, wherein the reaction is carried out in the presence of a catalyst; and the catalyst is used in an amount of preferably 0.001-0.1 wt%, more preferably 0.005-0.05 wt%, based on the amount of the diisocyanate used for preparing the polyisocyanate composition;
preferably, the catalyst is one or more selected from the group consisting of quaternary ammonium hydroxides, quaternary ammonium carboxylates, compounds containing an silylamino group, tertiary amine compounds, and Mannich base compounds;
further, the quaternary ammonium hydroxides are, for example, one or more selected from the group consisting of tetramethylammonium hydroxide, trimethylbenzylammonium hydroxide, tetraethylammonium hydroxide, dimethylethylcyclohexylammonium hydroxide, and hydrates thereof;
further, the quaternary ammonium carboxylates are, for example, one or more selected from the group consisting of tetramethylammonium 2-ethylhexanoate, tetramethylammonium octanoate, trimethylbenzylammonium 2-ethylhexanoate, trimethylbenzylammonium octanoate, tetramethylammonium formate, tetramethylammonium acetate, tetramethylammonium pivalate, trimethylbenzylammonium pivalate, tetramethylammonium decanoate, trimethylbenzylammonium decanoate, tetramethylammonium myristate, tetramethylammonium 2-ethylhexanoate, tetramethylammonium octanoate, trimethylbenzylammonium 2-ethylhexanoate, and trimethylbenzylammonium octanoate;
further, the compounds containing the silylamino group are, for example, one or more selected from the group consisting of hexamethyldisilazane, silylamine, and heptamethyldisilazane;
further, the tertiary amine compounds are, for example, one or two selected from the group consisting of triethylamine and tripropylamine;
further, the Mannich base compounds are, for example, tris(N,N-dimethylaminomethyl)phenol.

8. The polyisocyanate composition according to any one of claims 4-7, wherein the reaction is carried out at a temperature of 10-150°C, preferably 30-79°C, and more preferably 45-75°C;
and/or, a reaction endpoint of the reaction is reached when an NCO% value of the reaction system is within the range of 30-50%.

9. Use of the polyisocyanate composition according to any one of claims 1-8 as a crosslinking agent in a coating composition.

10. A two-component polyurethane coating composition, comprising component A and component B, wherein the component A comprises at least one polyisocyanate composition according to any one of claims 1-8, and the component B comprises at least one binder reactive towards isocyanate groups.

11. A coating layer having improved chemical resistance, wherein the coating layer is obtained by applying the polyurethane coating composition according to claim 10 onto a surface of a substrate.
